(19) **Europäisches Patentamt**
**European Patent Office**
**Office européen des brevets**

(11) **EP 1 909 157 A2**

(12) **EUROPEAN PATENT APPLICATION**

(43) Date of publication:
**09.04.2008 Bulletin 2008/15**

(51) Int Cl.:
**G05D 16/20** (2006.01) **F16H 61/02** (2006.01)

(21) Application number: **07019380.0**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **03.10.2006 US 542368**

(71) Applicant: **Eaton Corporation**
**Cleveland, Ohio 44114-2584 (US)**

(72) Inventors:
• **Dell'eva, Mark L.**
**Grand Blanc**
**MI 48439 (US)**

• **Surianarayanan, Ananthakrishnan**
**Lansdale**
**PA 19446 (US)**
• **Herbert, David E.**
**Rochester Hills**
**MI 48309 (US)**

(74) Representative: **Rüger, Barthelt & Abel**
**Patentanwälte**
**Postfach 10 04 61**
**73704 Esslingen (DE)**

(54) **Mode selection and switching logic in a closed-loop pulse width modulation valve-based transmission control system**

(57) A pulse width modulated (PWM) valve-based hydraulic control system is disclosed In one embodiment, a feedback control system includes a controller that receives a pressure command signal and a pressure feedback signal. The controller generates a duty cycle control signal that controls a PWM valve. The PWM valve provides a control pressure Pc to control a load, such as an actuator of an automatic transmission system. A pressure sensor measures the control pressure Pc and provides the pressure feedback signal. In another embodiment, a compensator provides compensation for linear and nonlinear effects in the pressure feedback signal, based at least in part, on other inputs, such as fluid temperature. In other embodiments, a plurality of controllers are provided, and a controller is selected by a switching logic processor, or by phase-in and phase-out filters, based on the pressure feedback signal and other inputs. A re-calibration process for the Pc versus duty cycle response of the PWM valve is also disclosed. The re-calibration method updates the feedback control system processes to maintain performance despite variations due to wear, temperature, and other factors.

Figure 3

## Description

### CROSS REFERENCE TO RELATED APPUCATION AND PATENT

This application is related to the pending U.S. Patent Application, Application No. 10/874,133, filed June 22, 2004, titled "CLOSED-LOOP VALVE-BASED TRANSMISSION CONTROL ALGORITHM"; and to U.S. Patent No. 6,807,472, issued October 19, 2004, titled "CLOSED LOOP CONTROL OF SHIFTING CLUTCH ACTUATORS IN AN AUTOMATIC SPEED CHANGE TRANSMISSION." This pending patent application and issued patent are commonly owned by the assignee hereof, and are hereby fully incorporated by reference herein as though set forth in full, for teachings on closed-loop hydraulic control systems.

## BACKGROUND

### 1. Field

The present disclosure relates in general to electronically controlled hydraulic (electro-hydraulic) systems using solenoid operated valves, and more particularly to closed-loop control of electro-hydraulic systems using pulse width modulation (PWM) valves.

### 2. Description of Related Art

Solenoid operated hydraulic valves (referred to herein as "solenoid valves") are widely used for controlling pressure in electro-hydraulic systems. In automatic, transmission systems electro-hydraulic control using solenoid valves is supplant purely mechanical control due to improvements in drive quality and fuel efficiency. A combination of software and hardware, including solenoid valves, allows easier adjustment of shift algorithms, and provides additional benefits in transmission shift smoothness and quality. Hydraulic pressure is used to change gears in an electro-hydraulic controlled automatic transmission. Electronic control of hydraulic pressure is implemented using solenoid valves. In turn, the hydraulic pressure is applied to actuators attached to elements of the transmission system such as clutch packs. For this application and many others, it is extremely important to have accurate and repeatable control of the solenoid valve for accurate, repeatable control of hydraulic pressure. U.S. Patent No. 6,807,472, issued October 19, 2004, titled "CLOSED LOOP CONTROL OF SHIFTING CLUTCH ACTUATORS IN AN AUTOMATIC SPEED CHANGE TRANSMISSION," describes an exemplary system for controlling automatic transmissions using solenoid valves. This patent is commonly owned by the assignee hereof, and is hereby fully incorporated by reference herein as though set forth in full, for teachings on closed-loop hydraulic control systems.

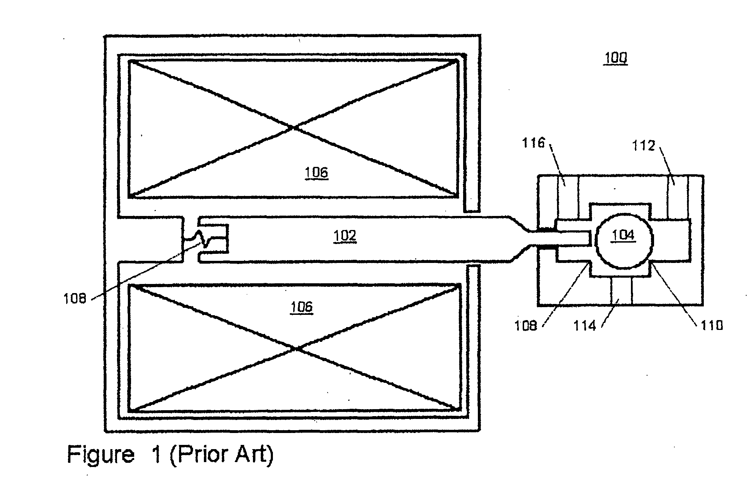

One class of solenoid valves are known as a pulse width modulation (PWM) valves. PWM valves are simple and power efficient. One example of a prior art "normally closed" PWM valve 100 is shown in FIGURE I. As shown in FIGURE 1, an armature 102 is disposed to control the position of a ball 104. When a coil 106 is not energized, a spring 108 forces the armature 102 against the ball 104, and the ball 104 is thereby forced against a valve seat 110. This prevents hydraulic fluid at a supply pressure Ps from flowing from a supply port 112 to a control port 114. Instead, the control port 114 is operatively coupled to a return port 116. In this condition, electrical power is not supplied to the coil. This condition corresponds to the PWM valve 100 being in a "closed" state. For this example, the return port 116 is at a return pressure Pr of approximately zero, and consequently a control pressure Pc at the control port 114 is also approximately zero.

When the coil 106 is energized, the armature 102 is pulled away from the ball 104, and the supply pressure Ps provided by the supply port 112 forces the ball against a valve seat 118. In this condition hydraulic fluid may flow from the supply port 112 to the control port 114, and the control pressure Pc at the control port 114 is approximately equal to Ps. Although a normally closed PWM valve is described for illustrative purposes, "normally open" PWM valves are also well known to persons skilled in the arts of hydraulic systems.

Because the control pressure Pc of a PWM valve switches between a minimum value, Pr, and a maximum value, Ps, control is implemented by using a pulse width modulation control signal, According to this method, electrical power pulses of selected length are applied to energize the PWM valve coil at a selected pulse rate or pulse frequency. A "duty rate" or "duty cycle" of the PWM drive signal is defined as the pulse length divided by the pulse period, where the pulse period comprises the inverse of the pulse frequency. By controlling the duty cycle of a drive signal applied to the PWM valve, an average value of the control pressure Pc may be provided at a selected level between Ps and Pr. For typical applications, the pulse period is much smaller than the response times of the actuators receiving the fluid at control pressure Pc. Consequently, the average level of the control pressure Pc is typically the target variable to be controlled for the PWM valve.

In some embodiments, a solenoid valve may be controlled by a microprocessor using pre-programmed levels of solenoid energization to effect desired changes in output pressure. These pre-programmed levels may be determined by heuristic rules. However, pre-programmed solenoid valve control systems are not able to re-calibrate, or apply corrections to, their pre-programmed rules while in operation. Such solenoid valve control systems may be characterized as "open loop" because they provide input to a solenoid valve, but fail to take advantage of feedback information that could be provided any sensors that measure solenoid valve output.

In an open loop system, once the rules are programmed into a microprocessor or other logical controller, the system is forced to assume that the relation between the programmed control levels and the solenoid valve pressure output is properly calibrated, and does not vary with time, temperature, and other variables. Even if the calibration is initially accurate, over time it becomes less accurate due to the wear of parts, degradation of hydraulic fluid, inherent nonlinearity in system behavior, and other factors. Moreover, open-loop systems are inherently error prone in operation, due to hydraulic load variations, pressure pulsations, and other system variables that may contribute to nonlinear system behavior.

Because of the on/off nature of PWM valves, and the resulting oscillations at the pulse frequency, systems employing PWM valves are especially susceptible to nonlinear effects and to effects caused by variations in system operating conditions, such as temperature.

Accordingly, there is a need for a PWM valve-based pressure control system that accounts for the nonlinear behavior of such systems. It is desirable to enable the control system to adapt to varying operating conditions, The present teachings overcome the limitations cited above and thereby improve PWM valve-based control systems.

## SUMMARY

A PWM valve-based hydraulic control system is disclosed. In one embodiment, a feedback control system comprises a controller adapted to receive a pressure command signal and a pressure feedback signal. The controller generates a duty cycle control signal responsive to the pressure command signal and the pressure feedback signal. The duty cycle control signal is provided to a PWM driver that, in turn, provides a drive signal to a PWM valve. The PWM valve also receives a fluid at a supply pressure Ps, and is coupled to a fluid return element at a return pressure Pr, The PWM valve provides fluid to a load at a control pressure Pc. A pressure sensor measures Pc, and generates the pressure feedback signal received by the controller.

In another embodiment, an input processor receives the pressure command signal and the pressure feedback signal and provides processed signal to the controller. An averaging filter is interposed between the pressure sensor and the input processor. The input processor performs signal processing such as scaling, analog-to-digital conversion, computing an error signal, and other processing functions.

According to another embodiment, a limit logic processor receives the duty cycle control signal from the controller, and performs limit logic operations that are directed back to the controller in order to modify the duty cycle control signal. For example, the limit logic processor may detect when the duty cycle control signal approaches selected limit values. When the limit values are detected, the output of an integrator in the controller may be set to constant value by the limit logic processor, thereby preventing integral windup or other instabilities.

Another embodiment is disclosed, wherein a feedback, control system further comprises a compensator coupled to receive signals from the input processor, and to provide compensated signals to the controller. The compensator also receives external inputs, such as a temperature signal indicative of the temperature of the hydraulic fluid. The compensator performs signal processing to compensate for nonlinearities in the pressure feedback signal, and to modify linear compensation of the pressure feedback signal. Thus, a mode of operation for feedback control system may be selectively implemented by the compensator responsive, at least in part, to the external inputs.

Another embodiment comprises a plurality of controllers coupled to receive signals from the input processor. The outputs of the controllers are coupled to a switching logic processor. Based on the pressure feedback signal, external inputs, and inputs obtained from optional sensors, the switching logic processor selects a controller output from the plurality of controllers to be conveyed to the PWM driver. Thus, a mode of operation for the feedback control system may be selectively implemented by the switching logic processor responsive to inputs provided to switching logic processor.

Yet another embodiment comprises a plurality of controllers and a plurality of phase-in and phase-out filters. Each controller is coupled to an associated and corresponding phase-in or phase-out filter. In one example, the phase-in and phase-out filters receive signals from the input processor, and selectively convey band-pass frequency-filtered signals to their associated and corresponding controllers. The duty cycle control signals generated by the controllers are received and combined by the PWM driver. For example, if a feedback control system has a first controller A and a second controller B, a phase-in filter A may provide a high frequency band signal to the controller A, and a phase-out filter B may provide a low frequency band signal to the controller B. The duty cycle control signals are combined by the PWM driver to enable feedback control across both frequency bands. External inputs may be provided to the phase-in and phase-out filters to selectively modify signal processing performed by the filters.

One embodiment provides a method for re-calibrating the control pressure Pc versus the duty cycle (Pc vs. DC). The re-calibrated Pe vs. DC is used to update the feedback control system properties in order to maintain the performance of the feedback control system despite changes variations caused by wear, temperature, and other variables.

These and other features of the disclosed system are described below in more detail.

## BRIEF DESCRIPTION OF THE DRAWINGS

FIGURE 1 is a schematic illustration of a prior art PWM valve.

FIGURE 2 is a block diagram that shows the relationship between an input current I to a PWM valve and an output control pressure Pc of the PWM valve.

FIGURE 3 is a block diagram illustrating a feedback control system according to one embodiment of the present teachings.

FIGURE 4 is a block diagram illustrating a feedback control system and showing an averaging filter, an input processor, and a limit logic processor.

FIGURE 5 is a block diagram illustrating a feedback control system and showing a compensator.

FIGURE 6 is a block diagram illustrating a feedback control system and showing a plurality of controllers and a switching logic processor.

FIGURE 7 is a block diagram illustrating a feedback control system and showing a plurality of controllers, a phase-in filter, and a phase-out filter.

FIGURE 8 is a plot of a PWM valve output pressure versus duty cycle ("Pc vs. DC").

FIGURE 9 is a block diagram illustrating a system for re-calibrating Pc vs. DC for a PWM valve.

FIGURE 10 is a flow chart diagram illustrating a method for re-calibrating Pc vs. DC to update a feedback control system.

FIGURE 11 is a flow diagram showing a method for implementing a PWM valve feedback control system having a single controller.

FIGURE 12 is a flow diagram showing a method for implementing a PWM valve feedback control system having a plurality of controllers and a switching logic processor.

FIGURE 13 is a flow diagram showing a method for implementing a PWM valve feedback control system having a plurality of controllers and a plurality of phase-in and phase-out filters.

Like reference numbers and designations in the various drawings indicate like elements.

## DETAILED DESCRIPTION

Throughout this description, embodiments and variations are described for the purpose of illustrating uses and implementations of the inventive concepts. The illustrative description should be understood as presenting examples of the inventive concept, rather than as limiting the scope of the concept as disclosed herein.

*PWM Valve Feedback Control System*

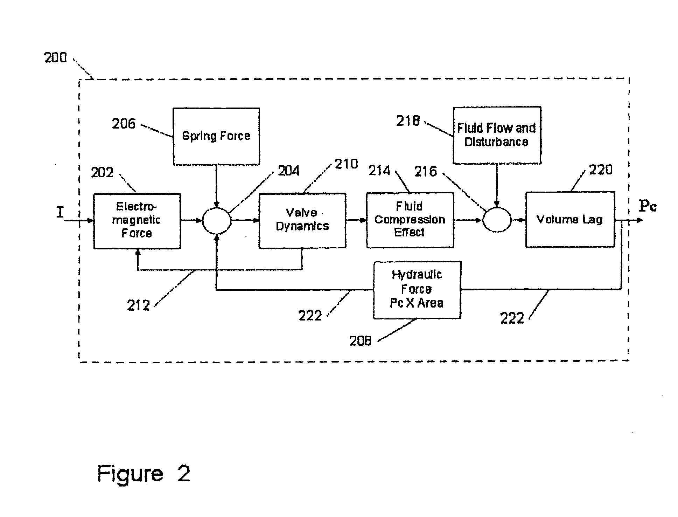

A block diagram of a PWM valve model 200 is shown in FIGURE 2. As described below, the elements and interactions illustrated in FIGURE 2 represent exemplary effects that influence an output pressure, Pc, of a PWM valve (*e.g.,* PWM valve 100, FIGURE 1) when driven by an input current I. These exemplary effects contribute to the dynamics and nonlinear behavior of the PWM valve,

When the input current I is provided to a coil of a PWM valve (*e.g.,* the coil 106 of the prior art PWM valve 100, FIGURE 1), an electromagnetic force 202 is applied to an armature (*e.g.,* the armature 102, FIGURE 1). A "combined force" element 204 represents a combination of forces that act on the armature. In addition to the electromagnetic force 202, the combined force element 204 also receives a spring force 206 (*e.g.,* as provided by the spring 108, FIGURE 1) and a hydraulic force 208 (described in more detail below). The combined force element 204 represents a net force on the armature that causes the armature to move. The armature motion is represented by a valve dynamics element 210. The armature motion produces an electromagnetic induction current in the coil, which is represented by the feedback line 212 from the valve dynamics element 210 to the electromagnetic force 202,

An armature force produced by the valve dynamics element 210 is operatively transmitted to a fluid control element 216 (*e.g.,* the ball 104, FIGURE 1) via a fluid compression effect 214. The armature force, as modified by the fluid compression effect 214, represents the nonlinear effects caused by compressibility of the fluid. A flow and disturbance effect 218 represents the flow of fluid in and out of the PWM valve (*e.g.,* through ports 112, 114 and 116, FIGURE 1). The fluid control element 216 responds to the forces received from the valve dynamics element 210 (as modified by the fluid compression effect 214 and the flow and disturbance effect 218). The fluid output from the fluid control element **216** is modified by the volume lag element 220. The volume lag element 220 represents a delay in pressure response due to fluid volume in the system that receives the fluid. A control pressure Pc is generated at the output of the volume lay element 220.

A feedback line 222 conveys a hydraulic force 208 to the combined force element 204. The magnitude of the hydraulic force 208 is proportional to the product of the control pressure Pc and an effective area of the fluid control element 216. In one example, the effective area of the fluid control element 216 may be an area of the ball 104 (FIGURE 1) that receives the control pressure Pc via the feedback line 222.

From the complex behavior of a PWM valve in response to a drive current I described above, persons skilled in the art of hydraulic design will understand that, for purposes of designing a feedback loop, the PWM valve cannot be modeled as a DC gain or linear transfer function. Due to the above-described complex behavior, traditional proportional control methods cannot be readily implemented for PWM valve-based feedback control systems without adverse outcomes such as control instability and degraded response speed, The present teachings overcome these limitations of the prior art feedback control methods for PWM valves.

As previously noted, although a normally closed PWM valve has been used in the description set forth above for exemplary purposes, the present methods and apparatus apply equally to normally open PWM valves.

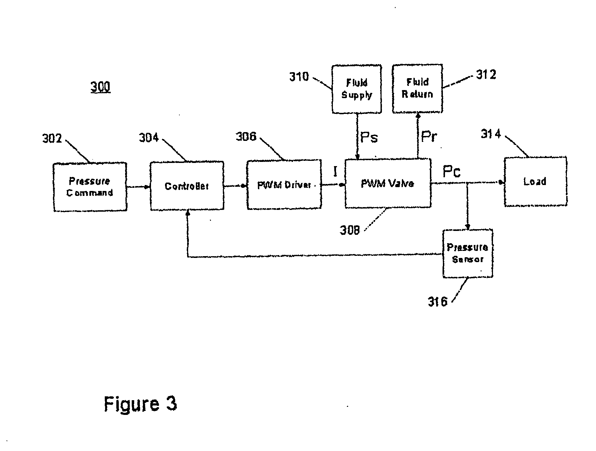

FIGURE 3 is a block diagram illustrating a feedback control system 300 according to one embodiment of the present teachings. As shown in FIGURE 3, the exemplary feedback control system 300 comprises a pressure command element 302, a controller 304, a PWM driver 306, and PMW valve 308, a fluid supply 310, a fluid return element 312, a load 314 and a pressure sensor 326. The pressure command element 302 provides a pressure command signal to the controller 304, The controller 304 also receives a pressure feedback signal from the pressure sensor 316. The controller 304 provides a duty cycle control signal to the PWM driver 306. The PWM driver 306 provides a pulsed drive current I to the PWM valve 308. The PWM valve 308 is operatively coupled to the fluid supply 310, which provides fluid at a given supply pressure Ps, and to the fluid return clement 312. The pressure Pr of the fluid return element 312 is lower than the fluid supply pressure Ps, and may be approximately zero for some embodiments. The PWM valve 308 provides a control fluid to the load 314 at a control pressure Pc. In one embodiment, the load 314 may comprise a clutch mechanism in an automatic transmission. The control pressure Pc is measured by the pressure sensor 316. The pressure sensor 316 provides the pressure feedback signal (which is representative of the control pressure Pc) to the controller 304.

In some embodiments, the controller 304 may be implemented using a digital processing unit, such as an embedded digital controller, microprocessor, microcontroller or other computer processing unit (CPU). In other embodiments analog signal processing electronics may be employed. In FIGURE 3, the controller 304 may include A/D and D/A converters, amplifiers for signal scaling, averaging filters, *etc.* (not shown). In one embodiment, the controller 304 controls the PWM driver 306 by inputting a duty cycle control signal to the PMW driver 306. Acting in accordance to a control law, the controller 304 generates the duty cycle control signal responsive to the pressure command signal received from the pressure command element 302 and the pressure feedback signal received from the pressure sensor 316. The PWM driver 306 provides a drive current, I, that is pulsed at a pulse rate and pulse width responsive to the duty cycle control signal received from the controller 304. Persons skilled in the arts of hydraulic system engineering and design will understand that there are many types of PWM drivers, such as a "peak and hold" driver, and the present teachings may be practiced utilizing any and all such PWM drivers.

The PWM valve 308 responds to the drive current I received from the PWM driver 306, The PWM valve 308 receives an input fluid from the fluid supply 310, generates a return fluid to the fluid return element 312, and provides the control fluid to the load 314 at a specified control pressure Pc, responsive to the drive current I. As noted above, the PWM valve 308 operates in a binary mode, and the control pressure Pc is switched between high and low values corresponding to Ps and Pr, respectively, at a rate and duty cycle responsive to the drive current I and the duty cycle control signal output by the controller 304. In some embodiments, the load 314 responds only to an average value of the control pressure Pc. For example, if the pulse rate is 100 Hz, and the load 314 comprises a clutch mechanism in an automatic transmission, the clutch mechanism will respond over a time period corresponding to many pulse cycles.

In the embodiments described herein, an exemplary controller type (*i.e.,* a proportional and integral (PI) feedback controller) is described. However, those skilled in the arts of feedback control systems will understand that the teachings herein may be practiced using many types of controllers including, without limitation, the following: all types of proportional controllers; all types of PI controllers; all types of proportional, integral and derivative (PID) controllers; controllers having any type of compensator design and/or gain-scheduling; and all types or combinations of discrete, analog, and event-driven controllers.

*Implementation of an Averaging Filter and a Limit Logic Processor in a PWM Valve Feedback Control System*

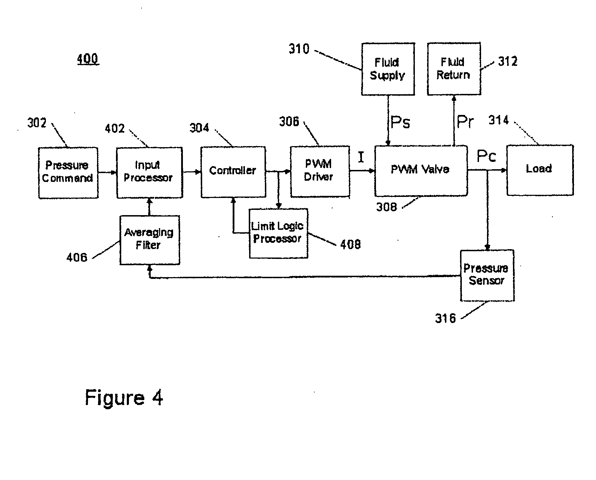

FIGURE 4 is a block diagram of a feedback control system 400 made in accordance with the present teachings. In one embodiment, an input processor 402 may be coupled directly to the pressure sensor 316 to receive the pressure feedback signal. In another embodiment, an averaging filter 406 may be coupled to receive the pressure feedback signal from the pressure sensor 316. In this embodiment, the averaging filter 406 provides an averaged value of the pressure feedback signal to the input processor 402. In yet other embodiments, a functionally equivalent averaging filter element (not shown) may be included within the input processor 402, or within the controller 304,

The control pressure Pc output by the PWM valve 308 varies between Ps and Pr at a selected pulse frequency, Fpwm. The frequency of Fpwm may equal 100 Hz. Frequencies of several Hz to several hundreds of Hz are also commonly used). For most applications, the load 314 responds only at frequencies of much less than Fpwm, and is therefore sensitive only to an average value of Pc averaged over a plurality of cycles of Fpwm. Therefore, it is desirable to control the average value of Pc. The averaging filter 406 facilitates this requirement by providing an average value of the pressure feedback signal to the input processor 402.

A maximum frequency of interest for a control system response may be designated as "Fsystem". The averaging filter 406 should have a well-defined cut-off frequency above Fsystem and below Fpwm, Further, the averaging filter should not cause a delay or phase shift sufficient to cause the feedback control system 400 to become unstable. The averaging filter 406 may be implemented using a variety of methods well known to persons skilled in the averaging filter design arts. These methods may include, without limitation, analog filter circuits and digital signal processing methods that provide an average of a digitized signal.

For each and all of the embodiments described herein, it should be understood that one or more averaging filters may be included according to the present teachings, even wherein the averaging filter or filters are not explicitly illustrated in the figures,

The input processor 402 performs processing functions such as signal scaling and A/D conversion. The input processor 402 may also compute an error signal based on the pressure command signal and the pressure feedback signal. The error signal may be input to the controller 304. In other embodiments, the input processor may output both the pressure command signal and the pressure feedback signals as separate signals to the controller 304, and the controller 304 may internally compute the error signal for feedback control processing. For simplicity, the controller 304 of the present example may comprise a proportional and integral (PI) controller. An exemplary PI controller is described in the ' above-noted related Patent Application No. 10/874,133, filed June 22, 2004, titled "CLOSED-LOOP VALVE-BASED TRANSMISSION CONTROL ALGORITHM" (Eaton Ref. No. TBD). This related application is commonly owned by the assignee hereof, and is hereby fully incorporated by reference herein as though set forth in full, for its teachings on PI feedback controllers for hydraulic systems. These skilled in the art of feedback control design and manufacture will understand that the present teachings may also be applied using other feedback controllers (*e.g.,* PID controllers).

In one embodiment, the controller 304 provides a duty cycle control signal to the PWM driver 306 and to a limit logic processor 408. The limit logic processor 408 provides protection from the following effects: "integral windup" ("integral windup" is a problem occuring for feedback controllers having integrators, as is well known to persons skilled in the art of feedback control systems); limit cycle output (wherein the duty cycle approaches the limits at which the maximum and minimum values of Pc occur); and other behaviors detrimental to feedback control performance. The output of the limit logic processor 408 is fed back to the controller 304 to provide additional control to the duty cycle control signal as described below in more detail. In other embodiments, the functions of the limit logic processor 408 may be performed by equivalent limit logic elements (not shown) included in the controller 304.

The limit logic processor 408 may include the following: a) exception logic wherein the error signal and the duty cycle signal values are evaluated to prevent integral windup; b) integral trim logic to reduce the quantitative effect of the integration process on the duty cycle control signal (*e.g.*, by reducing the gain of the integration process); c) limit logic to prevent the duty cycle control signal from overshooting and undershooting selected limits; and d) Boolean logic based on activation or deactivation of limit logic processes. The functions performed by the limit logic processor have the following advantageous effects; a) to maintain overall stability of the controller under all operating conditions; b) to meet performance specifications of the closed-loop pressure control system; c) to achieve control pressure tracking or regulation under all load conditions and environments; d) to provide a general control system that will work with different types of PWM values; and e) to achieve desired system performance independent of sensor variations, component variations, and other system or operating variables.

In one embodiment, the following limit logic examples may be employed:

**Exception Condition 1:**

IF (Duty Cycle > DCmax) AND (ErrorSignal > 0), THEN Set Integration Process Output = Constant Value. If the DutyCycle (*i.e.,* the pulse width divided by the pulse rate of the duty cycle control signal) exceeds a selected duty cycle maximum (DCmax, which may comprise the duty cycle at which Pc reaches a maximum value, as described in more detail below), and the ErrorSignal (*i.e.,* an error signal derived from the pressure command signal and the pressure feedback signal) is greater than zero, then an integration process performed by the controller 304 (FIGURE 4) is set to a constant value to prevent integral windup. For example, the output of an integrator (not shown) of the controller 304 may set to a constant value. In one example, if the input to the integrator is set to zero (e.g, implemented using an electronic circuit, such as a gate circuit), the output of the integrator will be held at a constant value that was present before the integrator input was set to zero. An exemplary PI controller having an integrator is described in the above-incorporated Patent Application No. 10/874,133.

**Exception Condition 2:**

IF (DutyCycle < DCmin) AND (ErrorSigaal < 0), THEN Set Integration Process Output = Constant Value. If the DutyCycle is less than a selected duty cycle minimum (DCmin, which may comprise the duty cycle at which Pc reaches a minimum value, as described in more detail below), and the ErrorSignal is less than zero, then the integration process performed by the controller 304 (FIGURE 4) is set to a constant value as described above in reference to the Exception Condition 1.

For each and all of the embodiments described herein, it should be understood that one or more limit logic processors may be included according to the present teachings, even wherein the limit logic processor or processors are not explicitly illustrated in the figures,

*Implementation of a Compensator in a PWM Valve Feedback Control System*

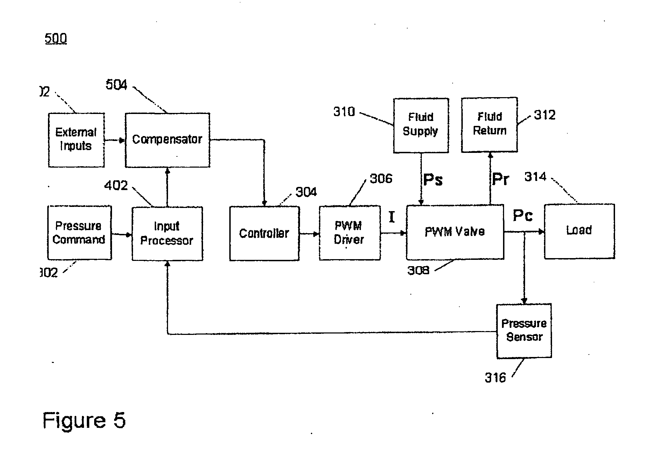

FIGURE 5 illustrates an embodiment of a feedback control system 500 made in accordance with the present teachings. The feedback control system 500 includes a compensator 504 that receives the output of the input processor 402 and provides a "compensated" output (described in more detail below) that is input to the controller 304. In other embodiments, the compensator 504, or a functionally equivalent component, may be included within the input processor 402 or the controller 304. Optionally, as described in more detail below, an external inputs element 502 may provide external inputs to the compensator 504. In some embodiments, the compensator 504 performs signal processing using analytically derived equations that compensate for "known nonlinearities" of the feedback control system 500. In other embodiments, the compensator 504 may employ empirically determined took-up tables in order to provide nonlinear compensation. In some embodiments, a combination of such methods may be implemented by the compensator 504. These implementations of the compensator 504, described below in more detail, are useful in extending the bandwidth of an otherwise linear controller 304 in order to meet performance specifications and response requirements.

One known nonlinearity in a hydraulic fluid system is flow nonlinearity, which relates a flow variable of the fluid to the square root of a pressure variable of the fluid. An example of a procedure for deriving a control law $\alpha(t)$ based, in part, on flow nonlinearity is indicated by the equations shown in the following paragraph.

EQUATION 1, below, shows the relation between a fluid flow $Q(t)$, such as the fluid flowing from the control port 114 of PWM valve 100 (FIGURE 1), and the control pressure $Pc(t)$.

$$\text{EQUATION 1:}$$

$$Q(t) = \left( \alpha(t) K_{servo} \sqrt{\frac{2Pc(t) - Pr}{\rho}} \right)$$

wherein $\rho$ is the fluid density, $\alpha(t)$ is a nonlinear control law, $Pr$ is the return pressure, and $K_{servo}$ is the forward path gain. Based on EQUATION 1, an EQUATION 2 shown below may be derived.

$$\text{EQUATION 2:}$$

$$\alpha(t) = \frac{A}{K_{servo}} \sqrt{\frac{\rho}{2(Pc(t) - Pr)}} \ [NLTerm(K_p(P_{ref}(t) - Pc(t)) + K_i \int_{t_{01}}^{t} (P_{ref}(\sigma) - Pc(\sigma))d\sigma)]$$

Wherein $A$ is a cross sectional area *(e.g.,* the area of the control port 114 of FIGURE 1), $K_p$ is a proportional gain, $P_{ref}(t)$ is a reference pressure (*e.g.,* $P_{ref}(t)$ may be the supply pressure Ps, or a command pressure Pcmd corresponding to the pressure command signal), $K_i$ is an integral gain, and the *NLTerm* expression is a nonlinear function of the variables $Pc(t)$ and $P_{ref}(t)$. The *NLTerm* expression may be a quadratic or other higher order function of the variables $Pc(t)$ and $P_{ref}(t)$. Methods for determining the *NLTerm* expression are described in more detail below.

In one embodiment, the *NLTerm* expression, as a function *of $Pc(t)$* and $P_{ref}(t)$, may be determined by performing experimental measurements to obtain measurement data on a feedback system (*e.g.*, the feedback control system 500 of FIGURE 5) or on its components (*e.g.*, the PWM valve 308). For example, in one method for obtaining measurement data, the feedback control system 500 may be operated in an open-loop condition, In the open-loop condition, the controller 304 is adapted to provide a time-varying input duty cycle signal (*e.g.*, a step function, referred to herein as "DutyCycleStep(t)") to the PWM driver 306 (FIGURE 5) without using the pressure feedback signal. The DutyCyeleStep (t) may represent selected values of $P_{ref}(t)$. The resulting output $Pc(t)$ is measured by the pressure sensor 316 (FIGURE 5) for varying amplitudes of DutyCycleStep(t). These measured data may be processed, according to methods well known to persons skilled in the arts of feedback control system design, to generate a look-up table or other functional representation of the measured data. The measured data may analyzed according to the EQUATION 2 to obtain the control law $\alpha(t)$ and the *NLTerm* expression.

In another embodiment, the control law $\alpha(t)$ and the *NLTerm* may be represented by an analytic function of the variables $Pc(t)$ and $P_{ref}(t)$, wherein the analytic function is determined according to an approximate fit to the measured data. In another embodiment, the control law $\alpha(t)$ and the *NLTerm* may be represented by a piece-wise linear function of the variables $Pc(t)$ and $P_{ref}(t)$, wherein the piece-wise linear function is determined according an approximate fit to the measured data. Other methods for determining and/or representing the control law $\alpha(t)$ and the *NLTerm* (*e.g.*, such as analytical derivation based on physical models of the feedback control system components) may also be used within the scope of the present teachings. As persons skilled in the arts of feedback control systems, will, readily understand from these teachings, the analytical square root flow nonlinearity (as shown by the square root expression in EQUATION 2) may thus be incorporated as part of the control law $\alpha(t)$ that is implemented by the compensator 504 and the controller 304 (FIGURE 5). Thus, the teachings presented in reference to the EQUATION 2 illustrate how a known nonlinearity having an analytical representation, such as the flow nonlinearity; may be used to determine, at least in part, a control law for a closed-loop feedback control system.

In another embodiment, external inputs may be provided to the compensator 504 by the external inputs element 502. The external inputs may be used to selectively enable signal processing (which may be linear or nonlinear) that compensates for effects such as temperature induced variation of fluid density, bulk modulus, and other hydraulic fluid properties. These external inputs may be used to selectively implement a "mode" of operation for the compensator 504. For example, an external input indicating the temperature of the hydraulic fluid may be provided from a temperature sensor (not shown). The fluid temperature input may be used in conjunction with explicit equations that determine the relation between the temperature of the fluid and the fluid properties (*e.g.,* fluid density or bulk modulus) to derive an analytical compensation function or algorithm. The analytical function or algorithm may be selectively implemented by the compensator 504 responsive to the measured temperature of the fluid. For example, if the temperature exceeds a selected threshold, a first analytical function or algorithm may be implemented, and if the temperate does not exceed the selected threshold, a second analytical function or algorithm may be implemented. In another embodiment, a look-up table (not shown) or a gain-scheduling table (not shown) may be selected from a plurality of look-up tables or gain-scheduling tables to selectively implement a mode of operation, responsive to the external inputs. For example, the look-up table or gain-scheduling table may be selectively implemented by the compensator 504 according to the measured temperature of the fluid to effect compensation. If the temperature of the fluid is greater than a selected threshold value, a first table may be implemented, and if the temperature is less than the threshold value, a second table may be implemented. The look-up table may represent either a linear or a nonlinear signal processing function that is applied to the control variables (*e.g.*, the pressure feedback signal, or an error signal computed from the pressure feedback signal and the pressure command signal). Thus, the compensator 504 may provide, without limitation, one or more of the following types of compensation: analytical linear compensation, analytical nonlinear compensation, empirical linear compensation, and empirical nonlinear compensation. Further, the mode of operation of the compensator 504 may be selectively modified responsive , to the external inputs provided by external inputs element 502, as illustrated by the examples hereinabove.

For each and all of the embodiments described herein, it should be understood that one or more compensators may be included according to the present teachings, even wherein the compensator or compensators are not explicitly illustrated in the figures.

*Implementation of a Plurality of Controllers, a Switching Logic Processor, and Additional Sensors in a PWM Valve Feedback Control System*

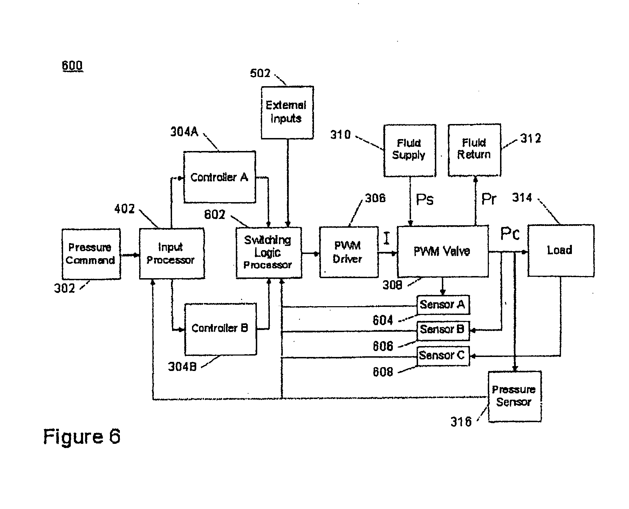

FIGURE 6 illustrates a feedback control system 600 comprising a plurality of controllers. Although only two controllers are shown in FIGURE 6, a controller A 304A and a controller B 3048, those skilled in the an of feedback control design and manufacture will understand that an arbitrary number of controllers may be used in accordance with the present teachings.

The controller A 304A receives input from the input processor 402 and provides output to a switching logic processor 602. The controller B 304B also receives input from the input processor 402 and provides output to the switching logic processor 602. In addition to receiving inputs from the controller A 304A and controller B 304B, the switching logic processor 602 may also optionally receive inputs from one, or any combination of the following elements: the external inputs element 502; the pressure sensor 316; a sensor A 604; a sensor B 606; and a sensor C 608. The sensor A 604 is coupled to the PWM valve 308 in order to generate a sensor signal, A, representative of a property, A, of the PWM valve 308. For example, the property A may be a position of the armature 102, or a current flowing in the coil 106 (FIGURE 1). The sensor B 606 is coupled to the fluid output of the PWM valve 308 in order to generate a sensor signal, B, representative of a property, B, of the fluid. For example, the property B, may comprise tje temperature of the fluid or the bulk modulus of the fluid. The sensor C 608 is coupled to the load 314 in order to generate a sensor signal, C, representative of a property, C, of the load 314. For example, the property C may comprise a position of a piston (not shown).

In one embodiment, the switching logic processor 602 determines whether the controller A 304A, or the controller B 304B provides an output to the PWM driver 306 based on a fluid temperature signal input received from the sensor B 606, As is well known, the fluid temperature affects the fluid properties, such as the bulk modulus (*i.e.,* the ratio of fluid pressure to a decrease in fluid volume), and viscosity. As fluid properties vary, the behavior of the fluid pressure Pc as a function of the PWM duty cycle also varies, and therefore properties of a feedback controller should adapt accordingly. For example, the controller gain, the compensation, the limit logic, and the pulse rate may all be modified based on the fluid temperature, in accordance with methods well known to persons skilled in the art of feedback control systems. Such modification can be effected, for example, by selecting either the controller A 304A or the controller B 305B based on the fluid temperature. In an alternative embodiment, the fluid temperature may be provided to the switching logic processor 602 via the external inputs element 502, which may receive a fluid temperature signal from an alternative temperature sensor (not shown). Exemplary logic for controller selection may be representative as follows.

EXAMPLE LOGIC 1:

IF (Fluid Temperature > Threshold Temperature), THEN (Use Controller A 304A); and
IF (Fluid Temperature ≤ Threshold Temperature), THEN (Use Controller B 304B).
In another embodiment, the switching logic processor 602 determines whether the controller A 304A or the controller B 305B provides output to the PWM driver 306. This determination is based on a signal provided by the external inputs element 502 that is representative of other operating conditions of the feedback control system 600. If the feedback control system 600 is part of an automatic transmission control system, for example, information regarding a current gear number (which may affect the properties of the load 314) may be received from the external inputs element 502, and used to determine which controller is selected (*i.e.*, controller A 304A or controller B 304B).
The switching logic processor 602 may use a combination of inputs to determine which controller is used, as shown by EXAMPLE LOGIC 2 as set forth below.

EXAMPLE LOGIC 2:

IF (Fluid Temperature > Threshold AND Current Gear Number > Selected Gear Number), THEN (Use Controller A 304A); and
IF (Fluid Temperature ≤ Threshold Temperature AND Current Gear Number > Selected Gear Number), THEN (Use Controller B 304B).
In another embodiment, a pressure signal output by the pressure sensor 316 may be used by the switching logic processor 602 to determine whether the controller A 304A or the controller B 305B is used to provide output to the PWM driver 306, For example, for a selected range of values of the pressure signal, the controller A 304A may be used, and for another selected range of values of the pressure signal, the controller B 304 B may be used.
In yet another embodiment, the switching logic process 602 determines whether the controller A 304A or the controller B 304B is used to provide output to the PWM driver 306 based on a current flowing in the coil 106 (FIGURE 1) as represented by a signal received from the sensor A 604. Because the current in the coil 106 is a combination of the drive current received from the PWM driver 306 and the induction current caused by the armature 102 (FIGURE 1), the amplitude and/or the time dependence of the current in the coil 106 may indicate whether the armature 102 is accurately following the duty cycle control signal. This may, in turn, indicate a desirable change in the pulse rate or other controller properties that can be effected by selecting either the output of the controller A 304A or the controller B 304B.
According to another embodiment, a property of the load 314 may be measured by the sensor C 608. In one example, if the load 314 comprises a piston (not shown), sensor C 608 may provide a signal that is representative of a position of the piston, and this signal may be used by the switching logic processor 602 to determine whether the controller A 304A or the controller B 305B is used to provide output to the PWM driver 306. Logic for this example may be set forth as follows: if the piston displacement exceeds a selected threshold, the controller A 304A is selected; otherwise the controller B 304B is selected.

As illustrated by the foregoing examples provided in reference to FIGURE 6, the switching logic processor 602 may select a controller output from a plurality of controllers, responsive to one or more input signals optionally provided to the switching logic processor 602. The logic for controller output selection may use a single input signal, or any combination of input signals.

*Implementation of a Plurality of Controllers, a Phase-in Filter, and a Phase-out Filter in a P WM Valve Feedback Control System*

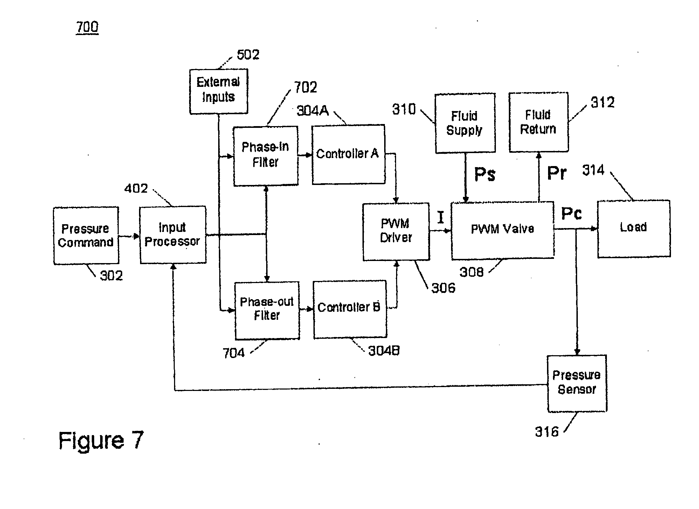

FIGURE 7 illustrates a feedback control system 700 comprising a plurality of controllers. Although only two controllers, a controller A 304A and a controller B 304B, are shown, persons skilled in the art of feedback control will understand that an arbitrary number of controllers may be used in accordance with the present teachings.

The input processor 402 provides input to a phase-in filter 702 and a phase-out filter 704. The phase-in filter 702 and the phase-out filter 704 optionally receive input from the external inputs element 502. The phase-in filter 702 and the phase-out filter 704 may also optionally receive inputs from other sensors (not shown), as described, above in reference to FIGURE 6. An output signal is provided from the phase-in filter 702 to the controller A 304A. Likewise, an output signal is provided from the phase-out filter 704 to the controller B 304B. The PWM driver 306 receives inputs from both the phase-in filter 702 and the phase-out filter 704, and these inputs are summed or otherwise combined by the PWM driver 306 to generate a drive current signal I that is provided to the PWM valve 308.

According to one example, the magnitude of the signal provided by the phase-in filter 702 to the controller A 304A is increased as the magnitude of the signal provided by the phase-in filter 702 to the controller A 304A is decreased, and *vice versa.* In one example, phase-in filter 702 may comprise a high-pass frequency filter (not shown), and the phase-out filter 704 may comprise a low-pass frequency filter (not shown). In this case, the high-pass filter and the low-pass filter may be designed so that the summation of their outputs is a unity gain function across the frequencies comprising the inputs from the input processor 402 to the phase-in filter 702 and the phase-out filter 704. The output signals from the controllers A 304A and B 304B will be responsive to the signals received from the phase-in filter 702 and the phase-out filter 704, respectively. Therefore, the resulting summation by the PWM driver 306 of the signals received from the controllers A 304A and B 304B will be responsive to the controller A 304A for high frequencies, and to the controller B 304B, for low frequencies, with a smooth transition in the range where the low-pass filter and the high-pass filter cut-off frequencies overlap. According to one example, the low-pass filter may pass frequencies less than ~10 Hz and the high-pass filter may pass frequencies greater than ~10 Hz, with an overlap frequency range of approximately ~ (8 to 12) Hz.

According to other embodiments, the following optional inputs may be provided to the phase-in filter 702 and the phase-out filter 704: the external inputs element 502 (FIGURE 7); the pressure sensor 316 (FIGURE 6); a sensor A 604 (FIGURE 6); a sensor B 606 (FIGURE 6); and a sensor C 608 (FIGURE 6). These optional inputs, as described above in reference to FIGURE 6, may be used in conjunction with switching logic within the phase-in filter 702 and the phase-out filter 704 (FIGURE 7) to selectively modify the inputs received by the controllers A 304A and B 304B, respectively. In one embodiment, if the load 314 comprises a clutch mechanism in an automatic transmission, a gear number signal may be provided by the external inputs element 502. In this case, a switching logic based on a selected gear number may be invoked in the phase-in filter 702 and the phase-out filter 704, This switching logic may, for example, select a unity gain for the phase-in filter 702 and a zero gain for the phase-out filter 704, thereby overriding the bandpass filters that are active for nonselected gear numbers. Other embodiments may implement the other optional inputs as described above in reference to FIGURE 6.

*Implementation of a Re-calibration Method for Updating a PWM Valve Feedback Control System*

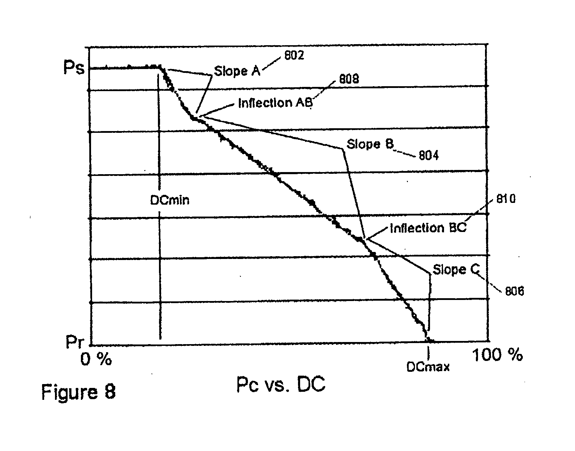

For selected operating conditions (*e.g,* pulse rate, PWM driver, Ps and Pr) the PWM valve 308 (FIGURES 3-7 and 9) exhibits a characteristic response curve for the average Pc output versus the duty cycle control signal (referred to herein as "Pc vs. DC", where the "Pc" comprises an average over a selected number of pulse cycles). A plot of a PWM valve output pressure versus duty cycle for a typical Pc vs. DC is shown in FIGURE 8. Ideally, the Pc vs. DC plot does not change with variations of temperature, time, wear, or Other variables.

A pre-calibration of the PWM valve 308 can be performed,prior to installation in a feedback control system (such as the feedback control systems 300, 400, 500, 600 and 700 described above in reference to FIGURES 3-7, respectively). The controllers, compensators, gain-scheduling tables, look-up tables, switching logic processors, phase-in and phase-out filters, *etc.,* disclosed herein, may be adapted to be responsive to the pre-calibrated Pc vs. DC Plot. If the Pc vs. DC plot were not subject to change, the feedback control system would maintain an initial performance level without further adaptation. In practice, however, testing has shown that the Pc vs. DC plot for a PWM valve varies due to wear and other factors. For example, these variations may include variations in a maximum DC and a minimum DC ("DCmax" and "DCmin," as shown in FIGURE 8) at which the Pc vs. DC plot reaches limiting values, changes in slopes (*e.g.,* slopes A 802, B 804 and C 806, FIGURE 8), and changes in the location of inflections (*e.g.*, inflections AB 808 and BC 810, FIGURE 8).

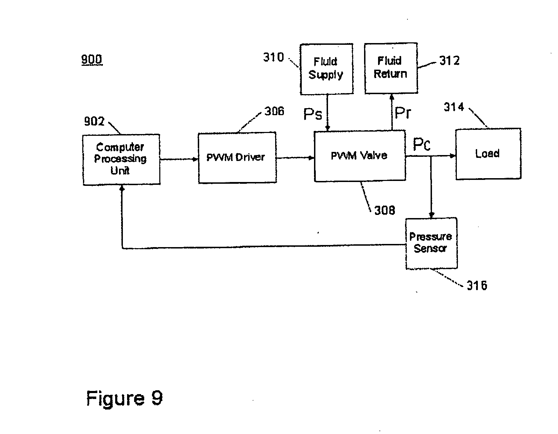

FIGURE 9 is a block diagram of a re-calibration system 900 that can be used to obtain a re-calibration of the Pc vs. DC plot for the PWM valve 308 in a control feedback control system, such as the feedback control systems 300, 400, 500, 600 and 700 described above in reference to FIGURES 3-7. As shown in FIGURE 9, a computer processing unit (CPU) 902 is coupled to the PWM driver 306. For example, in some embodiments, the CPU 902 may be incorporated in the pressure command element 302 (FIGURES 3-7). A duty cycle control signal is output to the PWM driver 306. The duty cycle control signal is swept through a selected range of DC values, and the resulting changes in Pc are measured by the pressure sensor 316, which provides a pressure signal to the CPU 902. The CPU 902 averages the pressure signal over a selected interval (alternatively, an averaging filter, such as the averaging filter 406 of FIGURE 4, may be used), and stores the Pc vs. DC plot values in a memory (not shown) such as a reprogrammable memory, a random access memory, *etc,* The re-calibration of the Pc vs. DC plot may be performed during a time interval when the feedback control system is inactivated. To reduce re-calibration time, if it is known that the DCmin and DCmax will not lie outside specific limits (*e.g.,* 10% and 90%), the DC sweep may be limited accordingly. Another method for reducing re-calibration time is to use larger steps until inflections are found. In the regions of the inflections, smaller steps may be used for greater precision. The slopes between the inflections may then be computed by the CPU 902.

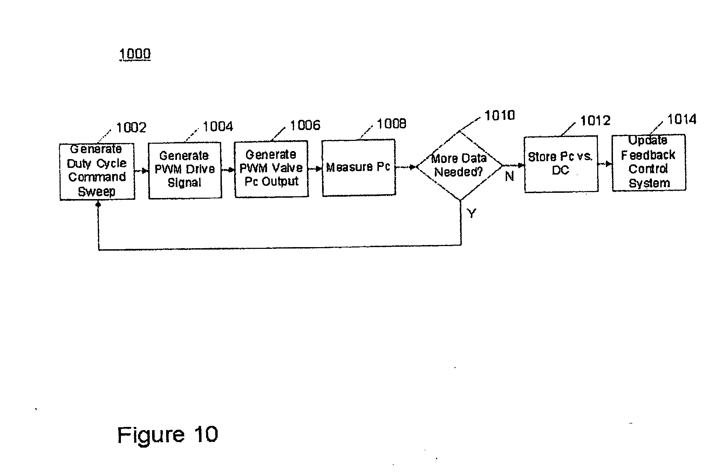

FIGURE 10 is a flow diagram showing a method 1000 for performing the re-calibration of a Pc vs. DC plot. Beginning at a STEP 1002, the CPU 902 (FIGURE 9) generates a duty cycle command sweep. The duty cycle control sweep is conveyed to the PWM driver 306 (FIGURE 9) and a STEP 1004 is executed to generate a PWM drive current. The PWM drive signal is input to the PWM valve 308 (FIGURE 9), and a STEP 1006 is executed to generate a PWM valve output Pc. At a STEP 1008. the pressure sensor 316 (FIGURE 9) measures the Pc value and the Pc signal is conveyed to the CPU 902. At a STEP 1010, the Pc vs. DC plot values are evaluated by the CPU 902 to determine whether more data are required. For example, if inflections are identified, then more data may be needed to better locate the DC values at which the inflections occur. In this cage, additional data points around the inflections may be acquired by performing additional duty cycle command sweeps. If sufficient data have been obtained, the method proceeds to a STEP 1012 and the Pc vs. DC re-calibration is stored by the CPU 902. At a STEP 1014, the feedback control system is updated as described below.

Based on the re-calibration of the Pc vs. DC plot described above, the controllers, compensators, gain-scheduling tables, look-up tables, switching logic processors, phase-in and phase-out filters, *etc.,* disclosed hereinabove, may be adapted by the CPU 902 via operative connections (not shown) to these elements. In one example, the limit logic processor 408 (FIGURE 4) may invoke exception logic for DCmax and DCmin as described above with reference to FIGURE 4. In this example, the CPU 902 may compute updated values for the DCmax and DCmin based on the re-calibration and provide the updated values to the limit logic processor 408.

In other embodiments, the controllers 304 (FIGURES 3-5). 304A, 304B (FIGURES 6 and 7), the compensator 504 (FIGURE 5), the switching logic processor (FIGURE 6), and the phase-in and phase-out filters (FIGURE 7) may include look-up tables, gain-scheduling tables, or other processing-related stored data that are based on the Pc vs. DC relation. In this case, the CPU 902 may re-compute the table values or stored data based on the re-calibration method, and update these values accordingly. The processes performed by the listed components may thereby be adapted in accordance with these examples of the re-calibration method.

In a further example, the switching logic processor 602 (FIGURE 6) may invoke switching logic operations based on the Pc values at which the inflections AB 808 (FIGURE 8) and BC 810 (FIGURE 8) occur. In this case, the CPU 902 may re-compute these Pc values based on the re-calibration, and update the Pc values for the switching logic operations performed by the switching logic processor 602.

In yet another example, the phase-in filter 702 and the phase-out filter 704 (FIGURE 7), may have digital processors that implement a high-pass and a low-pass filter, respectively. The cut-off frequencies for the filters may be selected responsive to the slopes and inflections found in the Pc vs. DC plot. In this case, the CPU 902 may re-compute the cut-off frequencies, responsive to the re-calibration, and update the properties of the filters as implemented by the digital processors.

*Methods for Implementing a PWM Valve Feedback Control System*

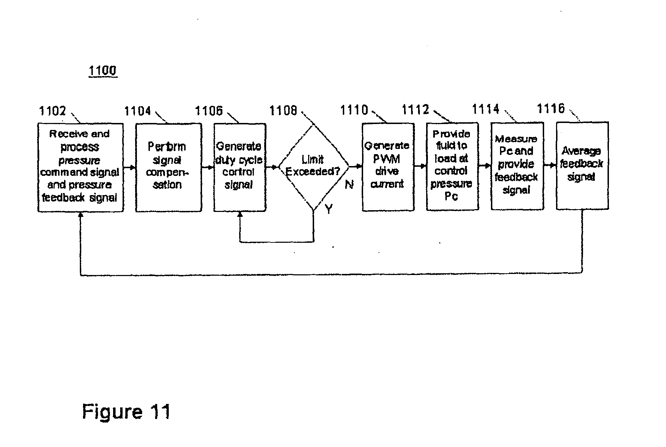

FIGURE 11 is a flow diagram showing a method 1100 for implementing a PWM valve feedback control system having a single controller. The STEPS 1102-1116 described below may be performed using systems, apparatus, components, and means described above in reference to FIGURES 3, 4 and 5. Persons skilled in the arts of feedback systems will understand in light of the present teachings that some of the STEPS 1102-1116 described below may be combined, or may be implemented on an optional basis.

Beginning at a STEP 1102, a pressure command signal and a pressure feedback signal are received, as for example, by an input processor or a controller. One or more of the following processes may be performed to provide a processed signal: a scaling process, an analog-to-digital conversion process, and an error signal computation process. The processed signal may comprise a single signal, or a plurality of signals (*e.g.*, a single processed error signal, or a processed pressure feedback signal and a processed pressure command signal).

At a STEP 1104, one or more compensation processes, may be performed on the processed signal to provide a compensated signal. Exemplary compensation processes may include the following: 1) a linear compensation process, and a 2) nonlinear compensation process. In some embodiments, the compensation process may comprise implementing a lookup table based, at least in part, on data measurements of the control pressure Pc as a function of the duty cycle control signal, wherein the data measurements are performed for an open-loop condition of the feedback control system. In some embodiments, the compensation process may comprise a control law $\alpha(t)$ based, at least in part, on the EQUATION 2, above. In some embodiments, the compensation process may be responsive to one or more other input signals. For example, the other input signals may comprise: 1) signals representing a temperature of the fluid, 2) signals representing a bulk modulus of the fluid, and 3) signals representing a current gear number for a gear in an automatic transmission system.

At a STEP 1106, a duty cycle control signal is provided, responsive, at least in part, to the compensated signal.

At a STEP 1108, the duty cycle control signal may be modified according to a limit logic process, responsive to the duty cycle control signal and to one or more selected duty cycle limit values. The limit logic process may comprise one or more of the following: (1) modifying a controller integration process to prevent integral windup; (2) reducing the quantitative effect of the integration process on the duty cycle control signal; (3) preventing the duty cycle control signal from overshooting and undershooting, the selected duty cycle limit values. If the selected duty cycle limit values are not exceeded, the duty cycle control signal may be provided for a next STEP 1110 without modification. Otherwise, the modified duty cycle control signal is provided for the STEP 1110.

At the STEP 1110, a drive current is provided, responsive to the duty cycle control signal.

At a STEP 1112, a fluid is provided at a control pressure Pc to a load, responsive to the drive current.

At a STEP 1114, a pressure feedback signal is provided, responsive to a measurement of the control pressure Pc.

At a STEP 1116, the pressure feedback signal is averaged, and the averaged value of the pressure feedback signal is provided for the STEP 1102.

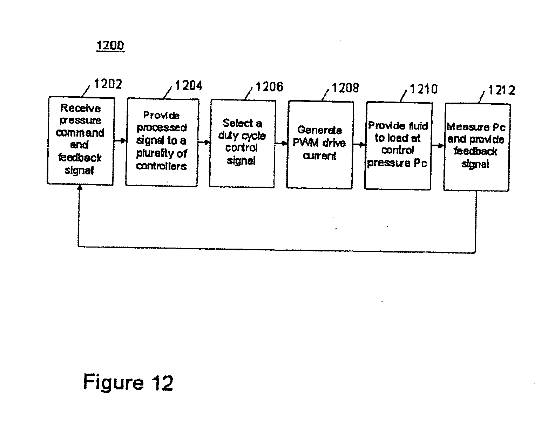

FIGURE 12 is a flow diagram showing a method 1200 for implementing a PWM valve feedback control system having a plurality of controllers. The STEPS 1202-1212 described below may be performed using systems, components, apparatus and means described above in reference to the FIGURE 6. Persons skilled in the arts of feedback systems will understand in light of the present teachings that some of the STEPS 1202-1212 described below may be combined, or may be implemented on an optional basis.

Beginning at a STEP 1202, a pressure command signal and a pressure feedback signal are received, as for example, by an input processor or a controller. One or more of the following processes may be performed to provide a processed signal: a scaling process, an analog-to-digital conversion process, and an error signal computation process. The processed signal may comprise a single signal, or a plurality of signals (*e.g.,* a single processed error signal, or a processed pressure feedback signal and a processed pressure command signal).

At a STEP 1204, a plurality of duty cycle control signals are provided, responsive to the processed signal.

At a STEP 1206, a switching logic processor receives the plurality of duty cycle control signals and one or more other input signals. A selected duty cycle control signal is selected from the plurality of duty cycle control signals, responsive, at least in part, to at least one other input signal. The other input signals may comprise one or more of the following signals: (1) the pressure feedback signal; (2) a signal representing a property of the fluid; (3) a signal representing a property of the PWM valve; (4) a signal representing a property of the load; and (5) a signal representing a current gear number for a gear in an automatic transmission system. In one example, the signal representing a property of the fluid may comprise a signal representing a temperature of the fluid.

At a STEP 1208, a drive current is provided, responsive to the selected duty cycle control signal of the STEP 1206.

At a STEP 1210, a fluid at a control pressure Pc is provided to a load, responsive to the drive current.

At a STEP 1212, the control pressure Pc is measured to provide the pressure feedback signal, responsive to the measured control pressure Pc. The pressure feedback signal is provided to the STEP 1202.

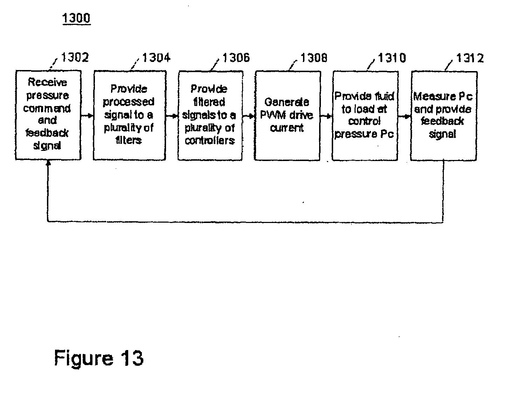

FIGURE 13 is a flow diagram showing a method 1300 for implementing a PWM valve feedback control system having a plurality of controllers and a plurality of phase-in and phase-out filters. The STEPS 1302-1312 described below are performed using apparatus and means described above in reference to the FIGURE 7. Persons skilled in the arts of feedback systems will understand in light of the present teachings that some of the STEPS 1302-1312 described below may be combined, or may be implemented on an optional basis.

Beginning at a STEP 1302, a pressure command signal and a pressure feedback signal are received by an input processor. The input processor may perform one or more of the following: a scaling process, an analog-to-digital conversion process, and.an error signal computation process. The input processor provides a processed signal that may comprise one, or a plurality of signals (*e.g.,* an error signal, or a processed pressure feedback signal and a processed pressure command signal).

At a STEP 1304, a plurality of phaso-in and phase-out filters receive the processed signal and provide a plurality of duty cycle control signals. In one example, the phase-in and phase-out filters may comprise bandpass filters. The phase-in and phase-out filters may provide filtered signals that are responsive, at least in part, to one or more other input signals. The other input signals may comprise one or more of the following signals: (1) the pressure feedback signal; (2) a signal representing a property of the fluid; (3) a signal representing a property of the PWM valve; (4) a signal representing a property of the load; and (5) a signal representing a current gear number for a gear in an automatic transmission system. In one example, the signal representing a property of the fluid may comprise a signal representing a temperature of the fluid.

At a STEP 1306, the filtered signals are provided to a plurality of controllers. Each controller generates a duty cycle control signal that is provided to a PWM driver.

At a STEP 1308, the duty cycle control signals are received by a PWM driver. The PWM driver combines the duty cycle control signals and generates a drive current.

At a STEP 1310, a PWM valve receives the drive current and provides a fluid at a control pressure Pc to a load, responsive to the drive current.

At a STEP 1312, a pressure sensor measures the control pressure Pc and provides the pressure feedback signal responsive to the measured control pressure Pc. The pressure feedback signal is provided to the input processor in accordance with the STEP 1302.

A number of embodiments of the present inventive concept have been described. Nevertheless, it will be understood that various modifications may be made without departing from the scope of the present teachings. For example, it should be understood that the functions described as being part of one module may in general be performed equivalently in another module,

Accordingly, it is to be understood that the inventive concept is not to be limited by the specific illustrated embodiments, but only by the scope of the appended claims. The description may provide examples of similar features as are recited in the claims, but it should not be assumed that such similar features are identical to those in the claims unless such identity is essential to comprehend the scope of the claim. In some instances the intended distinction between claim features and description features is underscored by using slightly different terminology.

**Claims**

1.  A pulse width modulated (PWM) valve-based feedback control system, comprising:

    a) a controller receiving a pressure command signal and a pressure feedback signal, and providing a duty cycle control signal responsive to the pressure command signal and the pressure feedback signal;
    b) a PWM valve driver, coupled to the controller, wherein the driver provides a drive current responsive to the duty cycle control signal;
    c) a PWM valve coupled to the DWM valve driver, wherein the valve provides a fluid at a control pressure Pc responsive to the drive current; and
    d) a pressure sensor, adapted to measure the control pressure Pc of the fluid, wherein the pressure sensor provides the pressure feedback signal responsive to the measured control pressure Pc.

2.  The pulse width modulated (PWM) valve-based feedback control system of claim 1, further comprising an input processor coupled to the controller, wherein the input processor receives the feedback signal and the pressure command signal, and wherein the input processor provides a processed signal to the controller, and wherein the input processor performs one or more processes selected from the following: a scaling process, an analog-to-digital conversion process, and an error signal computation process.

3.  The pulse width modulated (PWM) valve-based feedback control system of claim 2, further comprising a compensator coupled to the input processor, wherein the compensator receives the processed signal from the input processor and provides a compensated signal to the controller, and wherein the compensator performs a compensation process selected from the following categories of processes: 1) linear compensation processes, and 2) nonlinear compensation processes.

4.  The pulse width modulated (PWM) valve-based feedback control system of claim 3, wherein the compensation process comprises implementing a lookup table based, at least in part, on data measurements of the control pressure Pc and the duty cycle control signal, and wherein the data measurements are performed for an open-loop condition of the feedback control system.

**5.** The pulse width modulated (PWM) valve-based feedback control system of claim 3, wherein the compensation process comprises a control law $\alpha(t)$ based, at least in part, on the equation:

$$\alpha(t) = \frac{A}{K_{servo}} \sqrt{\frac{\rho}{2(Pc(t)-Pr)}} \; [NLTerm(K_p(P_{ref}(t)-Pc(t)) + K_i \int_{t_0}^{t} (P_{ref}(\sigma) - Pc(\sigma))d\sigma)]$$

wherein $\rho$ is a fluid density, $\alpha(t)$ is the nonlinear control law, $Pc(t)$ is a time-dependent return pressure, $Pr$ is a time-dependent return pressure, $K_{servo}$ is a forward path gain, $A$ is a cross sectional area, $K_p$ is a proportional gain, $P_{ref}(t)$ is a reference pressure, $K_i$ is an integral gain, and the $NLTerm$ expression is a nonlinear function of the variables $Pc(t)$ and $P_{ref}(t)$.

**6.** The pulse width modulated (PWM) valve-based feedback control system of claim 3, wherein the compensator receives at least one other input signal and performs the compensation process responsive, at least in part, to the at least one other input signal.

**7.** The pulse width modulated (PWM) valve-based feedback control system of claim 6, wherein the at least one other input signal is selected from the following categories of signals: 1) signals responsive to a temperature of the fluid, 2) signals responsive to a bulk modulus of the fluid, and 3) signals responsive to a current gear number for a gear of an automatic transmission system.

**8.** The pulse width modulated (PWM) valve-based feedback control system of claim 1, further comprising:

e) a limit logic processor, coupled to the controller, wherein the limit logic processor receives the duty cycle control signal from the controller, and wherein the limit logic processor provides a limit logic control signal to the controller responsive to the duty cycle control signal and to one or more selected duty cycle limit values, and wherein the controller responds to the limit logic control signal by performing one or more of the following processes: (1) modifying a controller integration process to prevent integral windup; (2) reducing the quantitative effect of the integration process on the duty cycle control signal; (3) preventing the duty cycle control signal from exceeding the selected duty cycle limit values.

**9.** The pulse width modulated (PWM) valve-based feedback control system of claim 8, wherein the process of modifying the controller integration process comprises the following logic process: IF (the duty cycle control signal is greater than a selected maximum value) AND (the error signal is greater than 0), THEN set the controller integration process output to a constant value.

**10.** The pulse width modulated (PWM) valve-based feedback control system of claim 8, wherein the process of modifying the controller integration process comprises the following logic process: IF (the duty cycle control signal is less than a selected minimum value) AND (the error signal is less than 0), THEN set the controller integration process output to a constant value.

**11.** The pulse width modulated (PWM) valve-based feedback control system of claim 2, further comprising an averaging filter coupled to the pressure sensor and the input processor, wherein the averaging filter receives the pressure feedback signal from the pressure sensor and wherein the averaging filter provides an averaged value of the pressure feedback signal to the input processor.

**12.** The pulse width modulated (PWM) valve-based feedback control system of Claim 2, wherein a process performed by at least one component of the system is modified according to the re-calibration method of Claim 28.

**13.** The pulse width modulated (PWM) valve-based feedback control system of Claim 3, wherein a process performed by at least one component of the system is modified according to the re-calibration method of Claim 28.

**14.** The pulse width modulated (PWM) valve-based feedback control system of Claim 8, wherein a process performed by at least one component of the system is modified according to the re-calibration method of Claim 28.

**15.** A pulse width modulated (PWM) valve-based feedback control system, comprising:

a) an input processor receiving a pressure command signal and a pressure feedback signal, and providing a processed signal responsive to the pressure command signal and the pressure feedback signal;

b) a plurality of controllers coupled to the input processor, wherein the controllers receive the processed signal and wherein the controllers provide a plurality of duty cycle control signals responsive to the processed signal;

c) a switching logic processor, coupled to the plurality of controllers, wherein the controllers receive the plurality of duty cycle control signals and at least one other input signal, wherein the switching logic processor provides a selected duty cycle control signal selected from the plurality of duty cycle control signals, and wherein the selected duty cycle control signal is selected responsive, at least in part, to the at least one other input signal;

d) a PWM valve driver, coupled to the switching logic processor, wherein the valve driver receives the selected duty cycle control signal and provides a drive current responsive to the selected duty cycle control signal;

e) a PWM valve, coupled to the PWM valve driver, wherein the valve receives the drive current and wherein the PWM valve provides a fluid at a' control pressure Pc, responsive to the drive current; and

f) a pressure sensor, adapted to measure the control pressure Pc of the fluid, wherein the pressure sensor provides the pressure feedback signal responsive to the measured control pressure Pc.

16. The pulse width modulated (PWM) valve-based feedback control system of claim 15, wherein the at least one other input signal is selected from the following signals: (1) the pressure feedback signal; (2) signals responsive to a property of the fluid; (3) signals responsive a property of the PWM valve; (4) signals responsive to a property of the load; and (5) signals responsive to a current gear number for a gear in an automatic transmission system.

17. The pulse width modulated (PWM) valve-based feedback control system of claim 16, wherein the signals responsive to a property of the fluid comprise signals that represent a temperature of the fluid.

18. The pulse width modulated (PWM) valve-based feedback control system of claim 15, wherein a process performed by at least one component of the system is modified according to the re-calibration method of claim 28.

19. A pulse width modulated (PWM) valve-based feedback control system, comprising:

a) an input processor receiving a pressure command signal and a pressure feedback signal, and providing a processed signal responsive to the pressure command signal and the pressure feedback signal;

b) a plurality of phase-in and phase-out filters, coupled to the input processor, wherein the plurality of phase-in and phase-out filters provide a plurality of filtered signals responsive to the processed signal;

c) a plurality of controllers, coupled to the plurality of phase-in and phase-out filters, wherein the plurality of controllers provide a plurality of duty cycle control signals responsive to the plurality of filtered signals;

d) a PWM valve driver, coupled to the plurality of controllers, wherein the PWM valve driver provides a drive current responsive to the plurality of duty cycle control signals;

e) a PWM valve, coupled to the PWM valve driver, wherein the PWM valve provides a fluid at a control pressure Pc to a load, responsive to the drive current; and

f) a pressure sensor, adapted to measure the control pressure Pc of the fluid, wherein the pressure sensor provides the pressure feedback signal responsive to the measured control pressure Pc.

20. The pulse width modulated (PWM) valve-based feedback control system of claim 19, wherein the phase-in and phase-out filters comprise bandpass filters.

21. The pulse width modulated (PWM) valve-based feedback control system of claim 19, further comprising at least one other input coupled to the plurality of phase-in and phase-out filters, wherein the filtered signals are provided responsive, at least in part, to the at least one other input signal, and wherein the at least one other input signal is selected from the following: (1) the pressure feedback signal; (2) signals responsive to a property of the fluid; (3) signals responsive a property of the PWM valve, (4) signals responsive to a property of the load; and (5) external input signals responsive to a current gear number for a gear in an automatic transmission system.

22. The pulse width modulated (PWM) valve-based feedback control system of claim 21, wherein the signals responsive to a property of the fluid comprise signals representing a temperature of the fluid.

23. The pulse width modulated (PWM) valve-based feedback control system of claim 19, wherein a process performed by a component of the system is modified according to the re-calibration method of claim 28.

24. A re-calibration method for a pulse width modulated (PWM) valve-based feedback control system, comprising the steps of:

a) providing a duty cycle (DC) command sweep signal comprising DC values;
b) providing a drive current responsive to the DC command sweep signal;
c) providing a fluid at a control pressure Pc responsive to the drive current;
d) measuring the control pressure Pc to obtain pressure signal data responsive to the DC command sweep signal;
e) evaluating the pressure signal data to determine if more pressure signal data are required;
f) repeating steps a) through e) if more pressure signal data are required, else proceeding to a step g);
g) storing the pressure signal data as a function of the DC values; and
h) modifying a process performed by at least one component of the pulse width modulated (PWM) valve-based feedback control system, responsive to the stored pressure signal data.

25. The re-calibration method of claim 24, further the comprising the steps of:

i) determining a minimum duty cycle value DCmin, wherein the control pressure Pc becomes constant for DC values less than DCmin; and
j) determining a maximum DC value DCmax, wherein the control pressure Pc becomes constant for DC values greater than DCmax.

26. The re-calibration method of claim 25, wherein the steps a) through h) are performed only for DC values between the DCmin and the DCmax.

27. The re-calibration method of claim 25, wherein the step h) comprises modifying a limit logic process of the PWM valve-based feedback control system responsive to the DCmin and the DCmax.

28. The re-calibration method of claim 24, wherein the at least one component is selected from the following: an input processor, a controller; a compensator; a limit logic processor; a switching logic processor; a phase-in filter; and a phase-out filter.

29. The re-calibration method of claim 24, further comprising the steps of:

k) identifying inflections in the pressure signal data as a function of DC values; and
l) obtaining more pressure signal data for DC values proximate to the inflections.

30. A pulse width modulated (PWM) valve-based feedback control method, comprising the steps of:

a) providing a duty cycle control signal responsive to a pressure command signal and a pressure feedback signal;
b) providing a drive current responsive to the duty cycle control signal;
c) providing a fluid at a control pressure Pc to a load, responsive to the drive current; and
d) providing the pressure feedback signal of the step a), responsive to the control pressure Pc.

31. The pulse width modulated (PWM) valve-based feedback control method of claim 30, further comprising the steps of:

e) providing a processed signal responsive to the feedback signal and the pressure command signal, wherein the processed signal is processed by at least one of the following: a scaling process, an analog-to-digital conversion process, and an error signal computation process; and
f) providing the duty cycle control signal responsive to the processed signal.

32. The pulse width modulated (PWM) valve-based feedback control method of claim 31, further comprising the steps of:

g) compensating the processed signal, wherein the compensation process is selected from the following categories of processes: 1) linear compensation processes, and 2) nonlinear compensation processes; and
h) providing the duty cycle control signal responsive to the compensated signal.

33. The pulse width modulated (PWM) valve-based feedback control method of claim 32, wherein the compensation process comprises implementing a lookup table based, at least in part, on data measurements of the control pressure Pc and the duty cycle control signal, and wherein the data measurements are performed for an open-loop condition of the feedback control system.

**34.** The pulse width modulated (PWM) valve-based feedback control method of claim 32, wherein the compensation process comprises a control law $\alpha(t)$ based, at least in part, on the equation:

$$\alpha(t) = \frac{A}{K_{servo}} \sqrt{\frac{\rho}{2(Pc(t) - Pr)}} \ [NLTerm(K_p(P_{ref}(t) - Pc(t)) + K_i \int_{t_{01}}^{t} (P'_{ref}(\sigma) - Pc(\sigma))d\sigma)]$$

wherein $\rho$ is a fluid density, $\alpha(t)$ is the nonlinear control law, $Pc(t)$ is a time-dependent return pressure, $Pr$ is a time-dependent return pressure, $K_{servo}$ is a forward path gain, $A$ is a cross sectional area, $K_p$ is a proportional gain, $P_{ref}(t)$ is a reference pressure, $K_i$ is an integral gain, and the $NLTerm$ expression is a nonlinear function of the variables $Pc(t)$ and $P_{ref}(t)$.

**35.** The pulse width modulated (PWM) valve-based feedback control method of claim 32, wherein the compensation process is responsive, at least in part, to at least one other input signal.

**36.** The pulse width modulated (PWM) valve-based feedback control method of claim 35, wherein the at least one other input signal is selected from the following categories of signals: 1) signals responsive to a temperature of the fluid, 2) signals responsive to a bulk modulus of the fluid, and 3) signals responsive to a current gear number for a gear in an automatic transmission system.

**37.** The pulse width modulated (PWM) valve-based feedback control method of claim 30, further comprising the steps of:

i) modifying the duty cycle control signal responsive a limit logic: process and to one or more selected duty cycle limit values, wherein the modification process includes at least one of the following: (1) modifying a controller integration process to prevent integral windup; (2) reducing a quantitative effect of the integration process on the duty cycle control signal; (3) preventing the duty cycle control signal from exceeding the selected duty cycle limit values; and,

j) providing the drive current responsive to the modified duty cycle control signal.

**38.** The pulse width modulated (PWM) valve-based feedback control method of claim 31, further comprising the step of providing an averaged value of pressure feedback signal, responsive to the control pressure Pc, for implementation according to the step a).

**39.** The pulse width modulated (PWM) valve-based feedback control method of claim 31, wherein at least one process of the method is modified according to the re-calibration method of claim 24.

**40.** The pulse width modulated (PWM) valve-based feedback control method of claim 32, wherein at least one process of the method is modified according to the re-calibration method of claim 24.

**41.** The pulse width modulated (PWM) valve-based feedback control method of claim 37, wherein at least one process of the method is modified according to the re-calibration method of claim 24.

**42.** A pulse width modulated (PWM) valve-based feedback control method, comprising:

a) providing a processed signal responsive to a pressure, command signal and a pressure feedback signal;
b) providing a plurality of duty cycle control signals responsive to the processed signal;
c) selecting a duty cycle control signal responsive, at least in part, to at least one other input signal;
d) providing a drive current responsive to the selected duty cycle control signal;
e) providing a fluid at a control pressure Pc to a load, responsive to the drive current; and,
f) providing the pressure feedback signal of the step a), responsive to the measured control pressure Pc.

**43.** The pulse width modulated (PWM) valve-based feedback control method of claim 42, wherein the at least one other input signal is selected from the following signals: (1) the pressure feedback signal; (2) signals responsive to a property of the fluid; (3) signals responsive a property of the PWM valve; (4) signals responsive to a property of the load; and (5) signals responsive to a current gear number for a gear in an automatic transmission system.

**44.** The pulse width modulated (PWM) valve-based feedback control method of claim 42, wherein at least one process is modified according to the re-calibration method of claim 24.

**45.** A pulse width modulated (PWM) valve-based feedback control method, comprising:

a) providing a processed signal responsive to a pressure command signal and a pressure feedback signal;
b) providing a plurality of filtered signals responsive to the processed signal;
c) providing a plurality of duty cycle control signals responsive to the plurality of filtered signals;
d) providing a drive current responsive to the plurality of duty cycle control signals;
e) providing a fluid at a control pressure Pc to a load, responsive to the drive current; and,
f) providing the pressure feedback signal of the step a), responsive to the control pressure Pc.

**46.** The pulse width modulated (PWM) valve-based feedback control method of claim 45, wherein the step b) comprises performing bandpass filtering.

**47.** The pulse width modulated (PWM) valve-based feedback control method of claim 45, wherein the filtered signals are responsive, at least in part, to at least one other input signal, and wherein the at least one other input signal is selected from the following: (1) the pressure feedback signal; (2) signals responsive to a property of the fluid; (3) signals responsive a property of the PWM valve; (4) signals responsive to a property of the load; and (5) external input signals responsive to a current gear number for a gear in an automatic transmission system.

**48.** The pulse width modulated (PWM) valve-based feedback control method of claim 45, wherein at least one process of the system is modified according to the re-calibration method of claim 24.

**49.** A re-calibration system for adapting a pulse width modulated (PWM) valve-based feedback control system, comprising:

a) means for providing a duty cycle (DC) command sweep signal comprising DC values;
b) means for providing a drive current responsive to the DC command sweep signal;
c) means for providing a fluid at a control pressure Pc responsive to the drive current;
d) means for measuring the control pressure Pc to obtain , pressure signal data responsive to the DC command sweep;
c) means for evaluating the pressure signal data to determine if more pressure signal data are required;
f) means for storing the pressure signal data as a function of the DC values; and
g) means for modifying a process performed by at least one component of the pulse width modulated (PWM) valve-based feedback control system, responsive to the stored pressure signal data.

**50.** The re-calibration system of claim 47, further comprising:

h) means for determining a minimum duty cycle value DCmin, wherein the control pressure Pc becomes constant for DC values less than DCmin; and
i) means for determining a maximum DC value DCmax, wherein the control pressure Pc becomes constant for DC values greater than DCmax. '

**51.** The re-calibration system of claim 49, further comprising;

j) means for identifying inflections in the pressure signal data as a function of DC values; and
k) means for obtaining more pressure signal data for DC Values proximate to the inflections.

Figure 1 (Prior Art)

Figure 2

300

310 — Fluid Supply     Fluid Return — 312

302          304          306                            314

Pressure Command → Controller → PWM Driver → I → PWM Valve → Pc → Load

Ps          Pr

308

Pressure Sensor

316

Figure 3

Figure 4

EP 1 909 157 A2

<u>500</u>

Figure 5

Figure 6

Figure 7

EP 1 909 157 A2

Figure 8

Figure 9

900

310 — Fluid Supply
312 — Fluid Return
314 — Load
316 — Pressure Sensor
306 — PWM Driver
308 — PWM Valve
902 — Computer Processing Unit

$P_S$  $P_T$  $P_C$

**1000**

| | | | | | | |
|---|---|---|---|---|---|---|
| Generate Duty Cycle Command Sweep (1002) | Generate PWM Drive Signal (1004) | Generate PWM Valve Pc Output (1006) | Measure Pc (1008) | More Data Needed? (1010) | Store Pc vs. DC (1012) | Update Feedback Control System (1014) |

Figure 10

1100

1102 — Receive and process pressure command signal and pressure feedback signal

1104 — Perform signal compensation

1106 — Generate duty cycle control signal

1108 — Limit Exceeded? — N / Y

1110 — Generate PWM drive current

1112 — Provide fluid to load at control pressure Pc

1114 — Measure Pc and provide feedback signal

1116 — Average feedback signal

Figure 11

1200

Receive pressure command and feedback signal — 1202

Provide processed signal to a plurality of controllers — 1204

Select a duty cycle control signal — 1206

Generate PWM drive current — 1208

Provide fluid to load at control pressure Pc — 1210

Measure Pc and provide feedback signal — 1212

Figure 12

30

Figure 13

1300

1302 — Receive pressure command and feedback signal

1304 — Provide processed signal to a plurality of filters

1306 — Provide filtered signals to a plurality of controllers

1308 — Generate PWM drive current

1310 — Provide fluid to load at control pressure Pc

1312 — Measure Pc and provide feedback signal

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 87413304 A
- US 6807472 B

- WO 10874133 A